Europäisches Patentamt

(19) European Patent Office

Office européen des brevets

(11) Numéro de publication: **0 251 860 B1**

(12) **FASCICULE DE BREVET EUROPEEN**

(45) Date de publication du fascicule du brevet: **07.11.90**

(21) Numéro de dépôt: **87401359.2**

(22) Date de dépôt: **17.06.87**

(51) Int. Cl.⁵: **F16L 25/00, F16L 37/26**

(54) Dispositif de raccordement étanche de deux tuyaux rigides et fixes.

(30) Priorité: **18.06.86 FR 8608803**

(43) Date de publication de la demande: **07.01.88 Bulletin 88/1**

(45) Mention de la délivrance du brevet: **07.11.90 Bulletin 90/45**

(84) Etats contractants désignés: **BE CH DE ES GB IT LI NL SE**

(56) Documents cités:
**EP-A- 0 124 430**
**DE-A- 3 146 305**
**FR-A- 1 253 963**
**FR-A- 1 457 568**

(73) Titulaire: **COMPAGNIE GENERALE DES MATIERES NUCLEAIRES (COGEMA), 2, rue Paul Dautier B.P. 4, F-78141 Velizy-Villacoublay(FR)**

(72) Inventeur: **Lehmann, Jean, 16, rue du Vallon, F-92160 Antony(FR)**

(74) Mandataire: **Mongrédien, André et al, c/o BREVATOME 25, rue de Ponthieu, F-75008 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne un dispositif pour réaliser le raccordement étanche de deux tuyauteries rigides et fixes notamment lorsque les axes de ces tuyauteries peuvent présenter des défauts d'alignment résultant d'un décalage angulaire et/ou d'un décalage latéral entre ces axes.

Dans un grand nombre d'installations industrielles, des appareils à poste fixe sont reliés entre eux par des tuyauteries rigides véhiculant des fluides de natures diverses.

Lorsqu'une telle installation est mise en place, il est rarement possible d'implanter les appareils l'un par rapport à l'autre de telle sorte que les axes des extrémités des tuyauteries qui les relient soient alignés. Le problème se complique lorsque le nombre de tuyauteries se multiplie.

De plus, il arrive que des appareils doivent être remplacés après une certaine période d'utilisation. Compte tenu des tolérances de fabrication de ces appareils, même si deux tuyauteries étaient alignées à l'origine, cet alignement ne se retrouve généralement plus après un tel remplacement.

Dans de nombreux cas, l'étanchéité du raccordement entre les tuyauteries nécessite donc d'utiliser des dispositifs de raccordement prenant en compte les défauts d'alignement existant entre les tuyauteries.

Une solution connue pour résoudre ce problème consiste à utiliser un compensateur souple dont les extrémités sont fixées sur des brides qui sont raccordées de façon étanche à des brides fixées aux extrémités des tuyauteries. A cet effet, des joints d'étanchéité sont généralement comprimés entre les brides adjacentes, par exemple au moyen de tirants traversant celles-ci.

Si cette solution permet bien de résoudre le problème du raccordement étanche de deux tuyauteries non alignées, elle présente cependant des inconvénients qui en interdisent l'usage dans certains cas particuliers.

Ainsi, la présence s'un compensateur à soufflet entre les deux tuyauteries crée à cet endroit une zone de rétention. Lorsque le fluide transporté est un fluide corrosif, cette zone de rétention risque de conduire dans un délai relativement bref à une rupture de l'étanchéité du compensateur, sous l'effet de la corrosion exercée par le fluide stagnant dans cette zone. Cette zone de rétention peut aussi créer des perturbations dans la circulation d'un liquide, telle que des coups de bélier, lorsque de l'air ou un autre gaz se trouve piégé dans cette zone lors d'un arrêt de la circulation du liquide.

Des situations de ce type se présentent notamment dans certains secteurs de l'industrie chimique et dans l'industrie nucléaire.

Pour illustrer ce dernier cas, on citera notamment les installations de traitement de combustibles nucléaires irradiés dans lesquels les différents appareils sont généralement situés dans des cellules de confinement étanches séparées par des parois que traversent des tuyauteries dans lesquelles circulent des fluides généralement corrosifs.

Dans le cas de l'industrie nucléaire, les problèmes énoncés précédemment se trouvent encore accentués par le fait que le raccordement des tuyauteries, notamment lors du remplacement de l'un des appareils, ne peut se faire qu'à distance à l'aide de télémanipulateurs ou d'engins de manutention analogues.

Dans ce contexte, on a proposé, dans le document EP-A 0 124 430, de raccorder de façon étanche deux tuyauteries rigides dont l'une est mobile en équipant la tuyauterie fixe d'une bride en forme de berceau et la tuyauterie mobile d'une bride conventionnelle qui vient se placer dans la bride en forme de berceau.

L'invention a précisément pour objet un nouveau dispositif de raccordement étanche de tuyauteries rigides et fixes, permettant de compenser des défauts d'alignement éventuels entre ces tuyauteries, ne présentant pas les inconvénients des compensateurs à soufflet énoncés précédemment et pouvant avantageusement être mis en place et démontés à distance à l'aide des engins de manutention classiques.

A cet effet, il est proposé conformément à l'invention un dispositif de raccordement étanche de deux tuyauteries rigides, ce dispositif comprenant deux premières brides solidaires des extrémités desdites tuyauteries, chacune de ces brides comportant une surface d'extrémité et une surface d'appui orientée en sens opposé par rapport à cette surface d'extrémité; caractérisé par le fait que les tuyauteries sont des tuyauteries fixes dont les axes peuvent présenter des défauts d'alignement, les premières brides présentant la forme de berceaux sur lesquels la surface d'extrémité et la surface d'appui sont situées en vis-à-vis l'une de l'autre, le dispositif comprenant de plus :

- deux pièces tubulaires coaxiales, une extrémité cylindrique d'une première de ces pièces étant reçue de façon coulissante dans une extrémité filetée de la deuxième pièce, chacune de ces pièces présentant à son extrémité opposée une deuxième bride comportant une surface d'extrémité apte à être placée en regard de la surface d'extrémité de l'une des premières brides, l'une des surfaces d'extrémité en regard des premières et des deuxièmes brides étant une surface sphérique, l'autre surface d'extrémité étant plane;
- deux premiers joints d'étanchéité toriques, placés entre les surfaces d'extrémité en regard des premières et des deuxièmes brides;
- deux écrous de serrage des joints vissés sur deux filetages formés respectivement sur lesdites pièces tubulaires coaxiales, à proximité de la deuxième bride, chaque écrou présentant une surface d'appui apte à venir en contact avec la surface d'appui de la première bride;
- un écrou de raccordement étanche desdites pièces tubulaires coaxiales, vissé sur l'extrémité filetée de la deuxième pièce tubulaire; et
- un troisième joint d'étanchéité torique, placé autour de l'extrémité cylindrique de la première pièce tubulaire, entre deux surfaces coniques en vis-à-vis formées respectivement à l'extrémité de la deuxième pièce tubulaire et sur l'écrou de raccordement étanche, la distance entre ces surfaces coniques augmentant radialement vers l'intérieur.

Dans un tel dispositif, l'utilisation de joints d'étanchéité toriques placés entre deux brides présentant respectivement une surface sphérique et une surface plane permet d'assurer l'étanchéité entre chacune des pièces tubulaires et la tuyauterie correspondante, quel que soit le décalage axial et/ou latéral existant entre les axes des tuyauteries. L'étanchéité entre les pièces tubulaires est réalisée quant à elle grâce au troisième joint torique qui est en contact à la fois avec la surface extérieure de l'une des pièces, l'extrémité de l'autre pièce et l'écrou de raccordement.

Par ailleurs, l'utilisation de deux pièces tubulaires coaxiales permet de réduire à un volume pratiquement négligeable la zone de rétention et supprime ainsi les inconvénients présentés par les compensateurs à soufflet utilisés habituellement dans ce cas.

Enfin le serrage et le desserrage des différentes pièces du dispositif de raccordement sont assurés par des écrous dont la rotation peut être commandée aisément à distance, par exemple en donnant à ces écrous la forme de cabestans.

Lorsque le dispositif de raccordement doit être démonté après une certaine période de fonctionnement, l'écrou de raccordement assurant le serrage du troisième joint torique peut être grippé. Dans une telle situation, il ne serait pas possible de faire coulisser les deux pièces tubulaires l'une par rapport à l'autre afin de raccourcir le dispositif de raccordement avant de le démonter.

Avantageusement, cet inconvénient est supprimé en prévoyant sur la première pièce une partie filetée adjacente à son extrémité cylindrique, un écrou de déblocage desdites pièces étant vissé sur cette partie filetée et comprenant un organe apte à venir en appui sur une surface de butée formée sur l'écrou de raccordement, pour déplacer ce dernier et la deuxième pièce vers ladite extrémité opposée de la première pièce.

De préférence, un manchon d'entraînement est alors monté libre en rotation sur la première pièce et coopère avec l'écrou de déblocage par des moyens d'entraînement en rotation.

Selon un mode de réalisation préféré de l'invention, des moyens sont prévus pour empêcher toute rotation relative entre les deux pièces tubulaires.

Dans ce même mode de réalisation, chacune des pièces tubulaires présente au moins une partie permettant son immobilisation en rotation par un outil approprié. La manutention à distance du dispositif est ainsi encore améliorée.

Au bout d'une certaine période d'utilisation du dispositif, il peut également s'avérer impossible de desserrer les écrous de serrage des joints. Compte tenu de la structure particulière de ce dispositif, son démontage serait alors impossible sans endommager les extrémité des tuyauteries. Pour supprimer cet inconvénient, chacune des pièces présente avantageusement à proximité de la deuxième bride une partie tubulaire interne portant cette dernière et une partie tubulaire externe sur laquelle est formé ledit filetage, ces deux parties tubulaires étant reliées entre elles en un emplacement décalé en éloignement de la deuxième bride par rapport à l'écrou de serrage.

Lorsqu'on se trouve dans les conditions de blocage qui viennent d'être exposées, cette configuration permet d'assurer le démontage du dispositif de raccordement par découpe simultanée des parties tubulaires interne et externe de chacune des pièces. Le dispositif de raccordement est ainsi libéré des tuyauteries sans dommage pour ces dernières.

Avantageusement, les joints d'étanchéité toriques sont des joints métalliques. La manutention à distance des joints d'extrémité peut également être facilitée en les montant dans des plaquettes de manutention.

On décrira maintenant, à titre d'exemple non limitatif, différents modes de réalisation de l'invention en se référant aux dessins annexés dans lesquels :

- la figure 1 illustre de façon schématique la mise en place d'un dispositif de raccordement étanche conforme à l'invention entre les extrémités de deux tuyauteries présentant un défaut d'alignement ;

- la figure 2 est une vue comparable à la figure 1 illustrant la position occupée par les différents éléments du dispositif de raccordement lorsque celui-ci a été placé entre les extrémités des tuyauteries ;

- la figure 3 représente le même dispositif de raccordement après serrage ;

- la figure 4 est une vue en coupe longitudinale et à plus grande échelle représentant la partie centrale du dispositif de raccordement des figures 1 à 3 ;

- la figure 5 est une vue comparable à la figure 4 illustrant l'obtention de l'étanchéité entre les deux pièces tubulaires du dispositif ;

- la figure 6 est une vue analogue à la figure 5 illustrant le déblocage des deux pièces tubulaires afin de raccourcir le dispositif lors de son démontage ; et

- la figure 7 est une vue en coupe longitudinale à plus grande échelle illustrant une variante de réalisation des extrémités du dispositif selon l'invention permettant de libérer ce dispositif en cas de grippage.

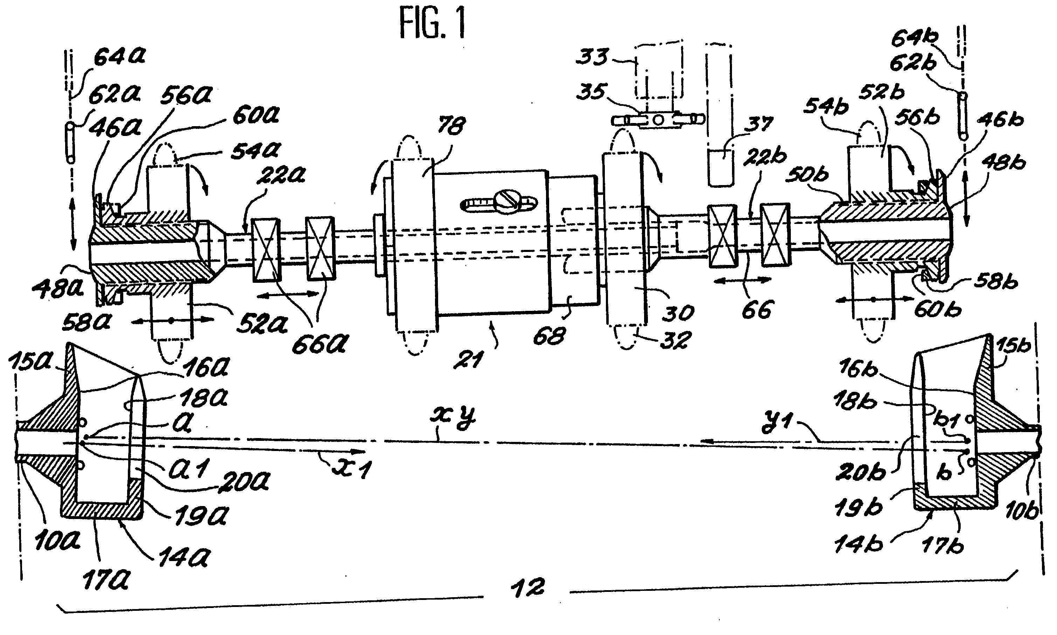

Sur la figure 1, on a représenté les extrémités de deux tuyauteries 10a et 10b qui doivent être raccordées de façon étanche.

Comme on l'a représenté très schématiquement, par rapport à leurs positions théoriques idéales représentées en $\underline{a}$ et $\underline{b}$, les centres $a_1$ et $b_1$ des extrémités des tuyauteris 10a et 10b sont décalés dans l'espace d'une certaine distance. De même, par rapport à leur axe commun théorique représenté en xy, les axes réels $x_1$ et $y_1$ de chacune des tuyauteries 10a et 10b sont décalés angulairement. En pratique, la distance séparant les points $a_1$ et $b_1$ des points théoriques $\underline{a}$ et $\underline{b}$ peut atteindre 6 mm et le décalage angulaire entre chacun des axes x1 et y1 et l'axe théorique xy peut atteindre 1°.

Conformément à l'invention, le raccordement étanche entre les tuyauteries 10a et 10b présentant de tels décalages est réalisé au moyen d'un dispositif de raccordement désigné de façon générale par la référence 12.

Ce dispositif 12 comprend tout d'abord, à l'extrémité de chacune des tuyauteries 10a et 10b, une bri-

Ce dispositif 12 comprend tout d'abord, à l'extrémité de chacune des tuyauteries 10a et 10b, une bride 14a et 14b en forme de berceau. Seule la bride 14a va maintenant être décrite plus en détail. La bride 14b est identique à cette bride 14a et les éléments qui la composent sont désignés par les mêmes références, affectés de la lettre b à la place de la lettre a.

La bride 14a en forme de berceau comprend une partie 15a formant la bride proprement dite fixée à l'extrémité de la tuyauterie 10a. Cette partie 15a formant bride présente une surface d'extrémité 16a par laquelle débouche la tuyauterie 10a. La bride 14a se prolonge au-delà de cette surface 16a par une partie 17a formant un berceau et présentant en section la forme d'un U ouvert vers le haut. A son extrémité, cette partie 17a se prolonge par une plaque 19a présentant une surface d'appui plane 18a parallèle à la surface 16a et située en vis-à-vis de celle-ci. Cette plaque 19a présente également dans le prolongement de la tuyauterie 10a une encoche 20a ouverte vers le haut.

Le dispositif de raccordement 12 selon l'invention comprend de plus un ensemble tubulaire amovible 21, de longueur variable, constitué principalement de deux pièces tubulaires coaxiales 22a et 22b.

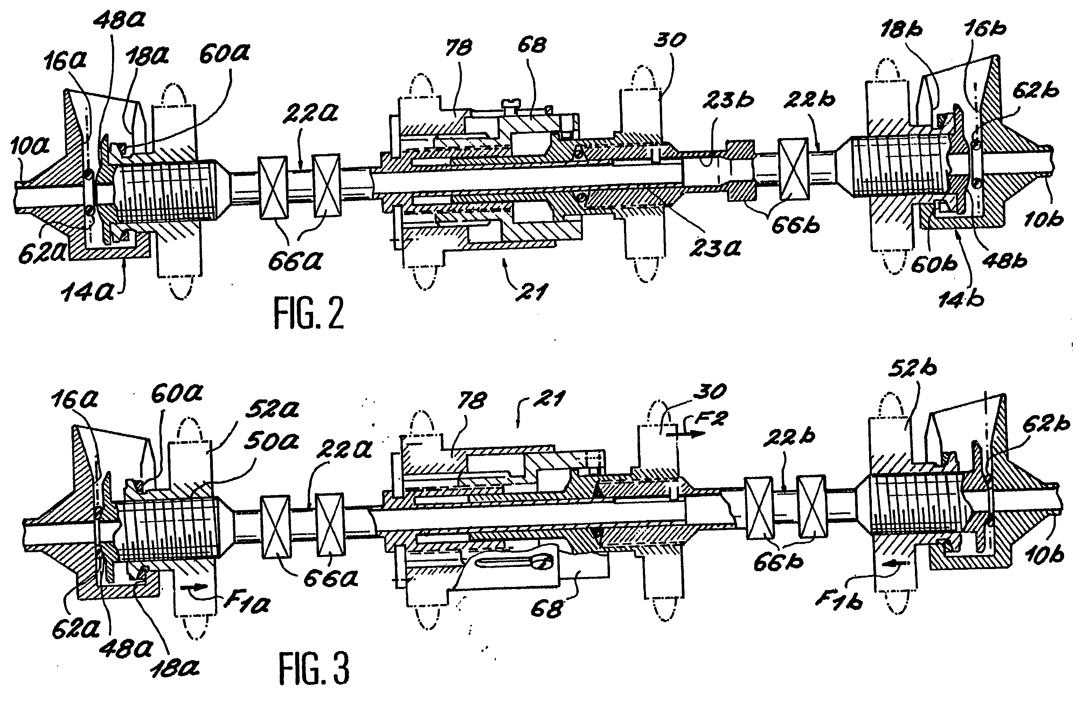

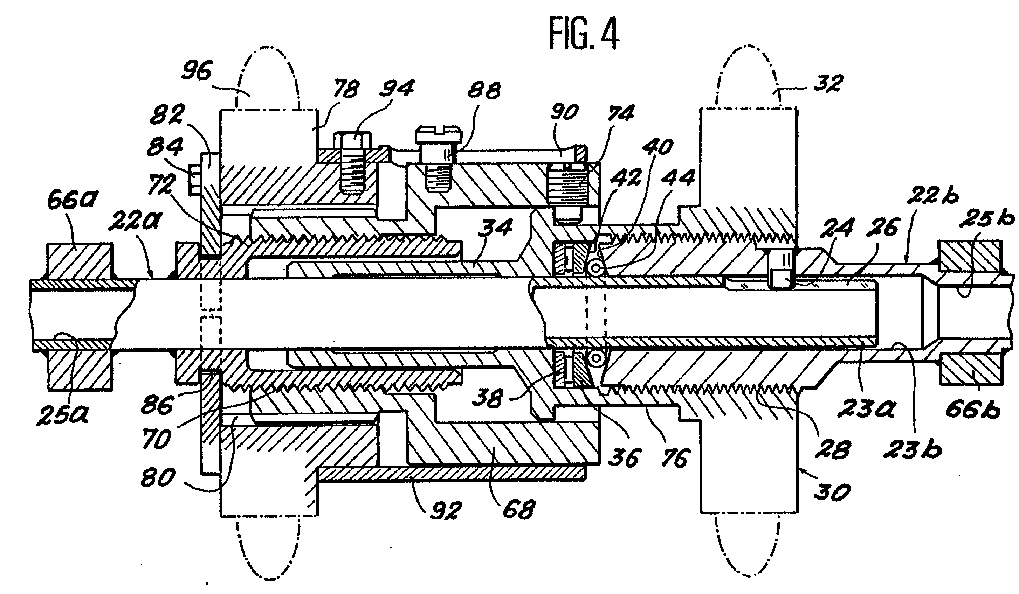

Comme on le voit mieux sur les figures 2 et 4, une extrémité cylindrique 23a de la pièce 22a pénètre de façon coulissante dans une extrémité de plus grand diamètre 23b de l'alésage formé dans la pièce 22b.

En dehors de cette extrémité 23b, les alésages 25a et 25b formés dans les pièces 22a et 22b présentent un diamètre uniforme égal au diamètre intérieur des tuyauteries 10a et 10b à raccorder. De cette manière, pratiquement aucune zone de rétention n'est créée.

Dans le mode de réalisation représenté, les pièces 22a et 22b sont limitées en débattement angulaire l'une par rapport à l'autre au moyen d'un ergot 24 fixé sur la pièce tubulaire 22b et faisant saillie radialement vers l'intérieur dans l'extrémité de plus grand diamètre 23b de l'alésage 25b. Cet ergot 24 pénètre dans une fente longitudinale 26 formée dans l'extrémité cylindrique 23a de la pièce tubulaire 22a.

A son extrémité dans laquelle est reçue l'extrémité tubulaire 23a de la pièce 22a, la pièce 22b présente sur sa surface extérieure un filetage 28 sur lequel est vissé un écrou de raccordement 30. Cet écrou 30 est crénelé sur une partie 32 de sa surface extérieure, de façon à former un cabestan dont la rotation peut être commandée à distance, par exemple à l'aide d'un outil 33 représenté sur la figure 1. Cet outil comprend un mandrin tournant 35, dont l'axe est placé perpendiculairement à celui de l'ensemble 21, et qui présente des doigts venant s'engréner sur la partie crénelée 32 de l'écrou 30, pour en commander la rotation.

L'écrou 30 se prolonge au-delà de l'extrémité de la pièce 22b pour former une partie tubulaire 34 dont la surface intérieure présente des portées d'extrémité qui coopèrent pratiquement sans jeu avec la surface extérieure cylindrique de l'extrémité 23a de la pièce 22a. Cette coopération assure un parfait alignement des axes des pièces 22a et 22b.

La face plane d'extrémité de cette partie tubulaire 34 tournée vers l'extrémité de la pièce 22b sert d'appui à une pièce annulaire 36, de section trapézoïdale, par l'intermédiaire d'un roulement à rouleaux 38. La face d'extrémité 40 de la pièce 22b ainsi que la face 42 de la pièce 36 située en vis-à-vis de cette face d'extrémité présentent des formes tronconiques telles que la distance séparant ces deux faces augmente radialement vers l'intérieur.

Un joint d'étanchéité torique 44 est placé entre ces surfaces 40 et 42 de façon à pouvoir être simultanément en contact avec ces deux surfaces et avec la surface extérieure cylindrique de l'extrémité 23a de la pièce tubulaire 22a. De préférence, le joint 44 est un joint métallique élastique tel que le joint Hélicoflex (marque déposée) commercialisé par la Société Céfilac.

Dans la disposition qui vient d'être décrite, le serrage de l'écrou 30 a pour effet de comprimer le joint 44 entre les surfaces 40 et 42. Par réaction, compte tenu de la forme conique de ces surfaces, le joint 44 est également appliqué contre la surface extérieure de l'extrémité cylindrique 23a de la pièce 22a. Après serrage de l'écrou 30, les pièces tubulaires 22a et 22b sont donc raccordées de façon étanche.

En se reportant à la figure 1, on voit qu'à leurs extrémités opposées les pièces tubulaires 22a et 22b se terminent par des brides 46a et 46b. Conformément à une caractéristique essentielle de l'invention, les surfaces d'extrémité 48a et 48b de ces brides 46a et 46b sont des surfaces sphériques, de préférence convexes.

Au voisinage de ces brides 46a et 46b, les pièces 22a et 22b comprennent des parties de plus forte épaisseur munies de filetages 50a et 50b sur leurs surfaces extérieures. Des écrous de serrage 52a et 52b sont vissés sur ces filetages 50a et 50b. Comme l'écrou de raccordement 30, les écrous 52a et 52b sont crénelés sur une partie 54a, 54b de leur surface extérieure. Ainsi, les écrous 52a et 52b forment des cabestans pouvant être manoeuvrés à distance, par exemple à l'aide de l'outil 33.

Au-delà de cette partie crénelée 54a, 54b, chacun des écrous 52a et 52b se prolonge vers la bride 46a, 46b et se termine par une partie en forme de bride 56a, 56b. La face de cette partie 56a, 56b opposée à la bride 46a, 46b est sphérique, de préférence convexe, et sert d'appui à une rondelle complémentaire 58a, 58b. Cette dernière comporte une face d'appui plane 60a, 60b orientée en sens opposé par rapport à la surface d'extrémité sphérique 48a, 48b de la bride correspondante.

Comme l'illustre la figure 2, lorsque l'ensemble 21 est placé entre les extrémités des tuyauteries 10a et 10b, les surfaces d'extrémité sphériques 48a et 48b viennent se placer en regard des surfaces d'extrémité planes 16a et 16b. Les surfaces d'appui 60a et 60b sont alors en vis-à-vis des surfaces d'appui 18a et 18b.

Le dispositif de raccordement étanche 12 conforme à l'invention comprend de plus deux joints d'étanchéité toriques 62a et 62b qui sont placés entre les surfaces d'extrémité 16a et 48a et 16b et 48b, respectivement. Comme le joint 44, ces joints 62a et 62b sont de préférence des joints métalliques flexibles tels que des joints Hélicoflex (marque déposée), commercialisés par la société Céfilac.

Afin de permettre leur manutention à distance, les joints 62a et 62b sont montés sur des plaques métalliques 64a et 64b représentées schématiquement sur la figure 1.

Avant que l'ensemble 21 soit placé entre les extrémités des tuyauteries 10a et 10b, sa longueur est ajustée par desserrage de l'écrou 30 formant cabestan et les écrous 52a et 52b en forme de cabestan sont actionnés afin de rapprocher les surfaces d'appui 60a, 60b des surfaces d'extrémité 48a, 48b. Cette configuration est illustrée par la figure 2, sur laquelle on voit que les joints 62a et 62b sont alors mis en place.

Comme l'illustre la figure 3 (flèches F₁ₐ et F₁ᵦ), les écrous 52a et 52b sont ensuite actionnés à tour de rôle afin de comprimer les joints d'étanchéité toriques 62a et 62b entre les faces d'extrémité des brides adjacentes.

Pour le joint 62a, ce résultat est obtenu en amenant en appui la face 60a contre la face 18a, puis en continuant à visser l'écrou 52a sur le filetage 50a. Par réaction, la pièce tubulaire 22a est alors déplacée vers la gauche en considérant la figure 3, ce qui a pour effet de comprimer le joint 62a entre les surfaces d'extrémité 48a et 16a.

Une opération similaire est ensuite réalisée à l'autre extrémité de l'ensemble 21, afin de raccorder de façon étanche la pièce tubulaire 22b à la tuyauterie 10b.

Conformément à l'invention, il est essentiel de remarquer que la coopération des joints toriques 62a et 62b avec les surfaces d'extrémité sphériques 48a, 48b des brides 46a et 46b permet d'assurer le raccordement étanche des pièces tubulaires 22a et 22b sur les tuyauteries 10a et 10b en dépit des décalages existant généralement entre les positions théoriques et réelles des extrémités de ces tuyauteries et des décalages angulaires éventuellement présentés par leurs axes.

Lorsque les extrémités de l'ensemble 21 sont raccordées de façon étanche aux extrémités des tuyauteries 10a et 10b de la manière qui vient d'être décrite, il reste à assurer le raccordement étanche des deux pièces tubulaires 22a et 22b.

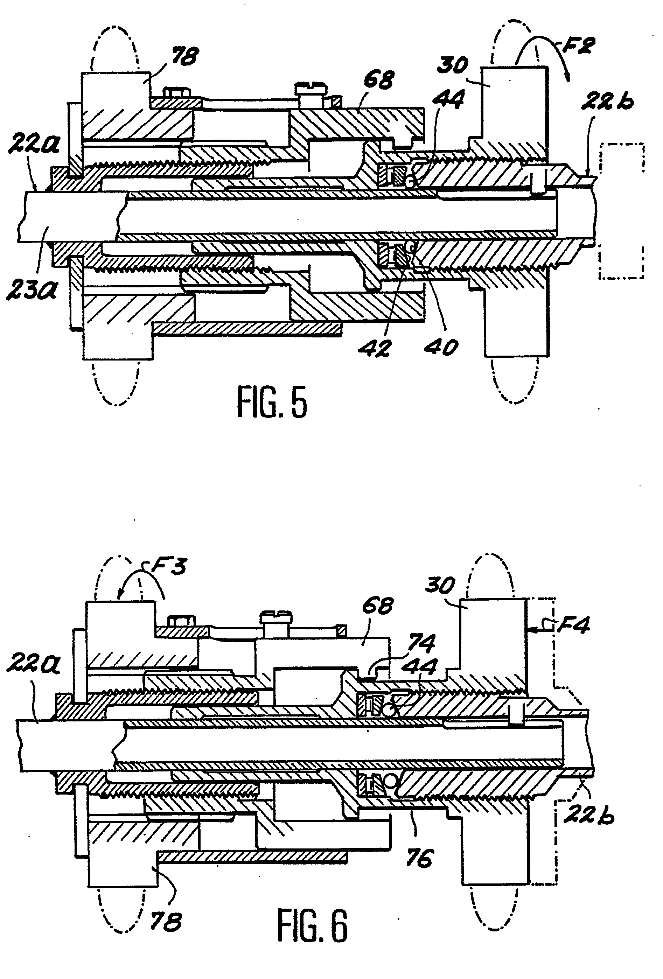

Conformément à l'invention et comme l'illustrent les figures 3 et 5, ce résultat est obtenu en actionnant l'écrou 30 afin de déplacer celui-ci vers la droite. On comprime ainsi le joint 44 entre les surfaces 42 et 40 et, compte tenu de la forme tronconique de celles-ci, contre la surface extérieure cylindrique de l'extrémité 23a de la pièce 22a. L'étanchéité entre les pièces 22a et 22b est ainsi assurée.

Comme l'illustrent également les figures 1 à 3, afin d'empêcher la rotation des pièces tubulaires 22a et 22b lors de l'entraînement en rotation des écrous 30, 52a et 52b, chacune de ces pièces tubulaires comporte de préférence des parties 66a et 66b permettant son immobilisation en rotation à l'aide d'un outil approprié tel que la clé 37 représentée schématiquement sur la figure 1. Ces parties 66a, 66b peuvent notamment présenter une section carrée ou hexagonale.

Lorsqu'on désire démonter le dispositif de raccordement 12 selon l'invention, par exemple pour changer l'un des appareils qu'il relie, il suffit normalement d'effectuer des opérations identiques à celles qui sont accomplies lors de sa mise en place, mais dans l'ordre inverse. Ainsi, le raccordement étanche entre les deux pièces tubulaires 22a et 22b est normalement relâché en actionnant l'écrou 30, après quoi les extrémités du dispositif peuvent à leur tour être désolidarisées des extrémités des tuyauteries par l'actionnement des écrous 52a et 52b.

Cependant, lorsque le dispositif a été en service pendant plusieurs années et surtout lorsqu'il a travaillé dans un milieu particulièrement corrosif, il est fréquent que l'écrou 30 soit grippé sur les pièces tubulaires. Dans ce cas, il n'est pas possible de désolidariser les deux pièces tubulaires 22a et 22b en actionnant cet écrou.

Pour remédier à cet inconvénient, dans le mode de réalisation préféré de l'invention représenté sur les figures 1 à 6, un écrou de déblocage 68 est vissé sur un filetage 70 (figure 4) formé sur la surface extérieure d'une pièce 72 solidarisée, par exemple par soudage, de l'extrémité tubulaire 23a de la pièce 22a.

De façon plus précise, la pièce 72 est soudée sur la pièce 22a au-delà de l'extrémité de la partie 34 de l'écrou 30 et le filetage 70 est formé sur une partie tubulaire de cette pièce 72 entourant la partie 34.

Le débattement de l'écrou 68 parallèlement à l'axe commun des pièces 22a et 22b par rapport à l'écrou 30 est limité dans l'un et l'autre sens par une vis 74 vissée radialement dans la pièce 68 et dont l'extrémité pénètre dans une gorge 76 formée sur la surface extérieure de l'écrou 30, entre la partie crénelée 32 et la partie tubulaire 34.

Dans le mode de réalisation représenté sur la figure 4, l'entraînement en rotation de l'écrou 68 est commandé par un manchon 78 disposé autour de l'écrou 68. Ce manchon 78 est solidarisé en rotation de l'écrou 68 par des cannelures complémentaires 80.

Par ailleurs, le manchon 78 est immobilisé axialement sur la pièce 72 grâce à une rondelle en deux parties 82 fixée à l'extrémité du manchon 78 tournée vers l'écrou 52a, par exemple au moyen de vis 84. Le bord périphérique interne de la rondelle 82 pénètre dans une gorge complémentaire 86 formée sur la surface extérieure de la pièce 72.

Le débattement relatif entre l'écrou 68 et le manchon 78 parallèlement à l'axe commun aux pièces 22a et 22b est limité par une vis 88 fixée radialement dans l'écrou 68 et traversant un trou oblong 90 formé dans une pièce tubulaire 92 solidarisée du manchon 78, par exemple au moyen de vis 94.

Afin d'assurer son entraînement en rotation, le manchon 78 présente une partie extérieure crénelée 96 qui lui donne la forme d'un cabestan apte à être actionné à distance au moyen d'un outil tel que l'outil 33 sur la figure 1.

Grâce aux caractéristiques qui viennent d'être décrites, et comme l'illustre en particulier la figure 6, on voit qu'en cas de grippage de l'écrou 30, il est toujours possible de faire coulisser les deux pièces

En effet, en faisant tourner le manchon 78 et, par conséquent, l'écrou 68 dans le sens de la flèche $F_3$ sur la figure 6, on amène l'extrémité de la vis 74 en appui contre le flanc gauche de la gorge 76 en considérant cette figure. En poursuivant ce mouvement, on déplace vers la gauche l'écrou 30 et, par conséquent, la pièce tubulaire 22b sur laquelle il est vissé, par rapport à la pièce tubulaire 22a sur laquelle le manchon 78 est immobilisé axialement. Le déplacement correspondant, représenté schématiquement par la flèche $F_4$ sur la figure 6, permet de réaliser le raccourcissement souhaité, même en cas de grippage de l'écrou 30.

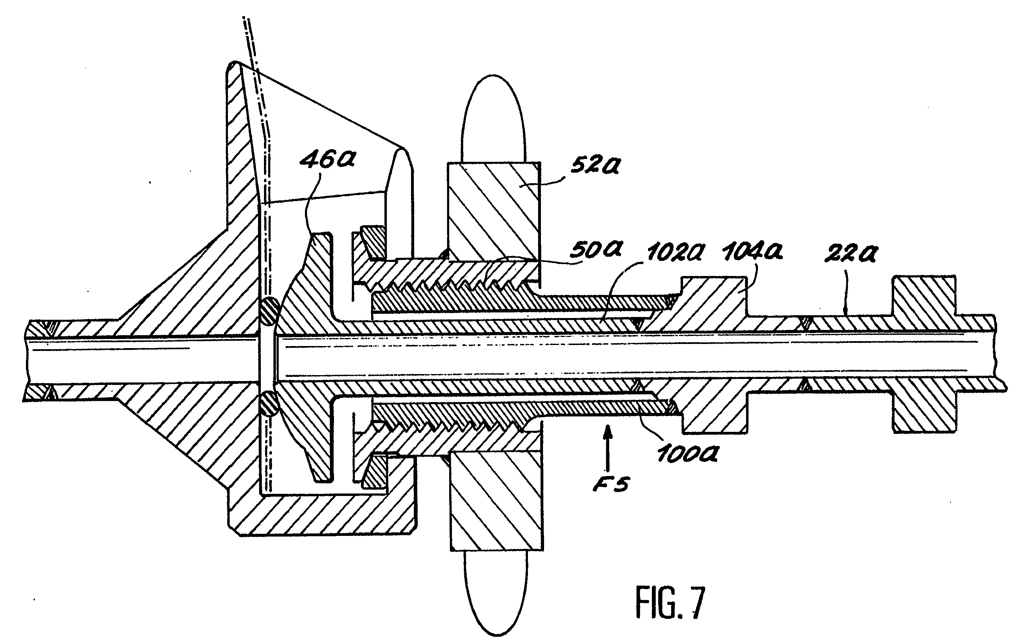

Dans les mêmes conditions d'usage prolongé du dispositif de raccordement selon l'invention, il peut également se produire un grippage des écrous 52a et 52b permettant le raccordement du dispositif aux extrémités des tuyauteries. Pour remédier à cet inconvénient, on a représenté sur la figure 7 une variante de réalisation du dispositif de raccordement selon l'invention.

Cette variante de réalisation diffère essentiellement du mode de réalisation précédemment décrit par le fait qu'au lieu d'être formé directement sur une partie élargie de la pièce 22a, 22b portant la bride 46a, 46b, le filetage 50a, 50b est formé sur une partie distincte.

Cette structure va maintenant être décrite de façon plus précise en référence à la figure 7, pour l'extrémité de la pièce tubulaire 22a. Bien entendu, une structure analogue se retrouve à l'extrémité de la pièce tubulaire 22b.

A proximité de son extrémité portant la bride 46a, la pièce tubulaire 22a comprend une partie tubulaire interne 102a portant cette bride 46a et une partie tubulaire externe 100a disposée coaxialement autour de la partie 102a. Ces deux parties tubulaires 100a et 102a sont reliées entre elles par exemple en étant soudées à une partie de plus forte épaisseur 104a qui est décalée axialement en éloignement de la bride 46a, par rapport au filetage 50a et à l'écrou 52a.

De cette manière, on forme entre la partie 104a et l'écrou 52a une zone dans laquelle il est possible de découper simultanément les deux parties tubulaires 100a et 102a comme l'indique la flèche $F_5$ sur la figure 7. En réalisant une telle découpe, une désolidarisation des extrémités du dispositif selon l'invention par rapport aux extrémités des tuyauteries est obtenue. Le démontage du dispositif sans endommager les tuyauteries est alors possible.

Bien entendu, lorsque les montages et les démontages du dispositif selon l'invention sont relativement fréquents, de sorte qu'aucun risque de grippage n'existe, l'écrou 68 et le manchon 78 peuvent être supprimés, et la variante de réalisation décrite en se référant à la figure 7 n'est pas necessaire.

## Revendications

1. Dispositif de raccordement étanche de deux tuyauteries rigides, ce dispositif comprenant deux premières brides (14a, 14b) solidaires des extrémités desdites tuyauteries, chacune de ces brides comportant une surface d'extrémité (16a, 16b) et une surface d'appui (18a, 18b) orientée en sens opposé par rapport à cette surface d'extrémité; caractérisé par le fait que les tuyauteries (10a, 10b) sont des tuyauteries fixes dont les axes ($x_1$, $y_1$) peuvent présenter des défauts d'alignement, les premières brides (14a, 14b) présentant la forme de berceaux sur lesquels la surface d'extrémité (16a, 16b) et la surface d'appui (18a, 18b) sont situées en vis-à-vis l'une de l'autre, le dispositif comprenant de plus:

– deux pièces tubulaires coaxiales (22a, 22b), une extrémité cylindrique (23a) d'une première (22a) de ces pièces étant reçue de façon coulissante dans une extrémité filetée de la deuxième pièce (22b), chacune de ces pièces présentant à son extrémité opposée une deuxième bride (46a, 46b) comportant une surface d'extrémité (48a, 48b) apte à être placée en regard de la surface d'extrémité (16a, 16b) de l'une des premières brides, l'une (48a, 48b) des surfaces d'extrémité en regard des premières et des deuxièmes brides étant une surface sphérique, l'autre surface d'extrémité (16a, 16b) étant plane;

– deux premiers joints d'étanchéité toriques (62a, 62b), placés entre les surfaces d'extrémité en regard des premières et des deuxièmes brides;

– deux écrous de serrage des joints (52a, 52b) vissés sur deux filetages (50a, 50b) formés respectivement sur lesdites pièces tubulaires coaxiales, à proximité de la deuxième bride, chaque écrou présentant une surface d'appui (60a, 60b) apte à venir en contact avec la surface d'appui (18a, 18b) de la première bride;

– un écrou de raccordement étanche (30) desdites pièces tubulaires coaxiales, vissé sur l'exrémité filetée de la deuxième pièce tubulaire (22b); et

– un troisième joint d'étanchéité torique (44), placé autour de l'extrémité cylindrique (23a) de la première pièce, entre deux surfaces coniques en vis-à-vis (40, 42) formées respectivement à l'extrémité de la deuxième pièce tubulaire (22b) et sur l'écrou de raccordement étanche (30), la distance entre ces surfaces coniques augmentant radialement vers l'intérieur.

2. Dispositif selon la revendication 1, caractérisé en ce que la première pièce tubulaire (22a) présente une partie filetée (70) adjacente à son extrémité cylindrique (23a), un écrou de déblocage (68) desdites pièces (22a, 22b) étant vissé sur cette partie filetée et comprenant un organe (74) apte à venir en appui sur une surface de butée formée sur l'écrou de raccordement étanche (30), pour déplacer ce dernier vers ladite extrémité opposée de la première pièce tubulaire.

3. Dispositif selon la revendication 2, caractérisé en ce qu'un manchon d'entraînement (78) est monté libre en rotation sur la première pièce tubulaire (22a) et coopère avec l'écrou de déblocage (68) par des moyens d'entraînement en rotation (80) autorisant une translation relative entre le manchon d'entraînement et l'écrou de déblocage.

4. Dispositif selon l'une quelconque des revendications 1 à 3, caractérisé en ce que des moyens (24) sont prévus pour empêcher toute rotation relative entre les deux pièces tubulaires coaxiales (22a, 22b).

5. Dispositif selon l'une quelconque des revendications 1 à 4, caractérisé en ce que chacune des pièces tubulaires (22a, 22b) présente au moins une partie (66a, 66b) permettant son immobilisation en rotation par un outil approprié (37).

6. Dispositif selon l'une quelconque des revendications 1 à 5, caractérisé en ce que chacune desdites pièces tubulaires coaxiales (22a, 22b) présente, à proximité de la deuxième bride (46a, 46b), une partie tubulaire interne (102a) portant cette dernière et une partie tubulaire externe (100a) sur laquelle est formé ledit filetage (50a), ces deux parties tubulaires étant reliées entre elles en un emplacement (104a) décalé en éloignement de la deuxième bride, par rapport à l'écrou de serrage (52a).

7. Dispositif selon l'une quelconque des revendications 1 à 6, caractérisé en ce que les joints d'étanchéité toriques (44, 62a, 62b) sont des joints métalliques.

8. Dispositif selon l'une quelconque des revendications 1 à 7, caractérisé en ce que les deux premiers joints d'étanchéité toriques (62a, 62b) sont montés dans des plaquettes de manutention (64a, 64b).

9. Dispositif selon l'une quelconque des revendications précédentes, caractérisé en ce que les surfaces d'extrémité (16a, 16b) des premières brides sont planes et les surfaces d'extrémité (48a, 48b) des deuxièmes brides sont sphériques.

**Patentansprüche**

1. Vorrichtung zum dichten Verbinden zweier starrer Rohrleitungen, wobei diese Vorrichtung zwei erste Flansche (14a, 14b) aufweist, die mit den Enden der Rohrleitungen sind, wobei jeder der Flansche eine Endoberfläche (16a, 16b) und eine Stützoberfläche (18a, 18b), die umgekehrt zu dieser Endoberfläche ausgerichtet ist, aufweist, gekennzeichnet durch die Tatsache, dass die Rohrleitungen (10a, 10b) feste Rohrleitungen sind deren Achsen $X_1$, $Y_1$ Ausrichtungsfehler aufweisen können, wobei die ersten Flansche (14a, 14b) die Form einer Wiege zeigen, bei der die Endoberfläche (16a, 16b) und die Stützoberfläche (18a, 18b) einander gegenüberliegen, wobei die Vorrichtung ausserdem aufweist:

– zwei koaxiale Röhrenteile (22a, 22b) wobei ein zylindrisches Ende (23a) eines ersten (22a) dieser Teile gleitend in einem mit einem Gewinde versehenen Ende des zweite Teils (22b) aufgenommen ist, wobei jedes dieser Teile an seinem gegenüberliegenden Ende einen zweiten Flansch (46a, 46b) aufweist, der eine Endoberfläche (48a, 48b) aufweist, die geeignet ist, gegenüber der Endoberfläche (16a, 16b) einer der ersten Flansche angeordnet zu werden, wobei die eine (48a, 48b) der Endoberflächen gegenüber den ersten und zweiten Flasche eine kugelförmige Oberfläche ist, während die andere Endoberfläche (16a, 16b) eben ist;

– zwei erste ringförmige, dichte Verbindungen (62a, 62b), die zwischen den Endoberflächen gegenüber den ersten und zweiten Flanschen angeordnet sind;

– zwei Befestigungsmuttern (52a, 52b) für die Verbindungen, die auf die beiden jeweils auf den röhrförmigen, koaxialen Teilen in der Nähe des zweiten Flansch gebildeten Gewinde geschraubt sind, wobei jede Mutter eine Stützoberfläche (60a, 60b) aufweist, die geeignet ist, mit der Stützoberfläche (18a, 18b) des ersten Flanschs in Verbindung zu treten;

– eine Mutter (30) zur dichten Befestigung der röhrenförmigen, koaxialen Teile, die auf das Gewindeende des zweiten röhrnförmigen Teils (22b) geschraubt ist; und

– eine dritte ringförmige, dichte Verbindung (44), die um das zylindrische Ende (23a) des ersten Teils zwischen zwei kegelförmigen, gegenüberliegenden, jeweils am Ende des zweiten röhrenförmigen Teils (22b) und auf der Mutter (30) zur dichten Befestigung gebildeten Oberflächen angeordnet ist, wobei der Abstand zwischen diesen kegelförmigen Oberflächen radial nach innen zunimmt.

2. Vorrichtung nach Anspruch 1, dadurch gekennzeichnet, dass das erste röhrenförmige Teil (22a) einen mit einem Gewinde versehenen Teil (70) angrenzend an sein zylindrisches Ende (23a) aufweist, wobei eine Entblockiermutter (68) für die Teile (22a, 22b) auf diesen mit einem Gewinde versehenen Teil geschraubt ist und ein Organ (74) aufweist, das geeignet ist, sich auf eine auf der Mutter (30) zur dichten Befestigung gebildeten Stoppfläche zu stützen, um letztere zum gegenüberliegenden Ende des ersten röhrenförmigen Teils zu verschieben.

3. Vorrichtung nach Anspruch 2, dadurch gekennzeichnet, dass eine Führungsmanschette (78) frei drehbar auf dem ersten röhrenförmigen Teil (22a) befestigt ist und mit der Deblockiermutter (68) über eine Drehführungsvorrichtung (80) zusammenwirkt, wodurch eine relative Translation zwischen der Führungsmanschette und der Deblockiermutter ermöglich wird.

4. Vorrichtung nach einem der Ansprüche 1 bis 3, dadurch gekennzeichnet, dass Vorrichtung (24) zur Verhinderung jeglicher Drehung zwischen den beiden koaxialen, röhrenförmigen Teilen (22a, 22b) vorgesehen sind.

5. Vorrichtung nach einem der Ansprüche 1 bis 4, dadurch gekennzeichnet, dass jedes der röhrenförmigen Teile (22a, 22b) wenigstens einen Teil aufweist, der die Verhinderung seiner Drehung durch ein geeignetes Werkzeug (37) erlaubt.

6. Vorrichtung nach einem der Ansprüche 1 bis 5, dadurch gekennzeichnet, dass jedes der röhrenförmigen, koaxialen Teile (22a, 22b) in der Nähe des zweiten Flanschs (46a, 46b) einen inneren, röhrenförmigen Teil (102a), der den letzteren trägt und einen äusseren, röhrenförmigen Teil (100a) aufweist, auf dem das Gewinde (50a) gebildet ist, wobei die beiden röhrenförmigen Teile untereinander an einer Stelle (104a), die von dem zweiten Flansch bezüglich der Befestigungsmutter (52a) versetzt ist, verbunden sind.

7. Vorrichtung nach einem der Ansprüche 1 bis 6, dadurch gekennzeichnet, dass die ringförmigen, dichten Verbindungen (44, 62a, 62b) Metallverbindungen sind.

8. Vorrichtung nach einem der Ansprüche 1 bis 7, dadurch gekennzeichnet, dass die beiden ersten ringförmigen, dichten Verbindungen (62a, 62b) auf Beförderungsplatten (64a, 64b) montiert sind.

9. Vorrichtung nach einem der vorhergehenden Ansprüche, dadurch gekennzeichnet, dass die Endoberflächen (16a, 16b) der ersten Flansche eben sind und dass die Endoberflächen (48a, 48b) der zweiten Flansche kugelförmig sind.

## Claims

1. Device for the tight connection of two rigid pipes comprising two first flanges (14a, 14b) integral with the ends of said pipes, each of the flanges having an end surface (16a, 16b) and a bearing surface (18a, 18b) oriented in the opposite direction with respect to said end surface, characterized in that the pipes (10a, 10b) are fixed pipes, whose axes (x₁, y₁) can have alignment deficiencies, the first flanges (14a, 14b) being shaped like cradles and on which the end surface (16a, 16b) and the bearing surface (18a, 18b) are positioned facing one another, the device also comprising; two coaxial tubular parts (22a, 22b) one cylindrical end (23a) of a first (22a) of these parts being slidingly received in a threaded end of the second part (22b), each of these parts having at its opposite end a second flange (46a, 46b) having an end surface (48a, 48b) which can be positioned facing the end surface (16a, 16b) of one of the first flanges, one (48a, 48b) of the end surfaces facing the first and second flanges being a spherical surface and the other end surface (16a, 16b) being planar; two first O-rings (62a, 62b) placed between the facing end surfaces of the first and second flanges; retaining nuts for the O-rings (52a, 52b) screwed onto two threads (50a, 50b) respectively formed on said tubular coaxial parts, in the vicinity of the second flange, each nut having a bearing surface (60a, 60b) able to come into contact with the bearing surface (18a, 18b) of the first flange; a tight coupling nut (30) between said tubular coaxial parts and screwed onto the threaded end of the second tubular part (22b); and a third O-ring (44), placed around the cylindrical end (23a) of the first part, between two facing conical surfaces (40, 42) respectively formed at the end of the second tubular part (22b) and on the tight coupling nut (30), the distance between said conical surfaces increasing radially inwards.

2. Device according to claim 1, characterized in that the first tubular part (22a) has a threaded portion (70) adjacent to its cylindrical end (23a), a nut (68) for unlocking said parts (22a, 22b) being screwed onto said threaded portion and incorporates a member (74) which can bear on an abutment surface formed on the tight coupling nut (30) in order to move the latter towards the opposite end of the first tubular part.

3. Device according to claim 2, characterized in that a drive sleeve (78) is mounted so as to rotate freely on the first tubular part (22a) and cooperates with the unlocking nut (68) by rotational means (80) allowing a relative translation between the drive sleeve and the unlocking nut.

4. Device according to any one of the claims 1 to 3, characterized in that means (24) are provided for preventing relative rotation between the two tubular coaxial parts (22a, 22b).

5. Device according to any one of the claims 1 to 4, characterized in that each of the tubular parts (22a, 22b) has at least one portion (66a, 66b) permitting its immobilization in rotation by an appropriate tool (37).

6. Device according to any one of the claims 1 to 5, characterized in that each of the said tubular coaxial parts (22a, 22b) has, in the vicinity of the second flange (46a, 46b) an inner tubular portion (102a) carrying the latter and an outer tubular portion (100a) on which is formed the said thread (50a), said two tubular portions being interconnected at a location (104a) displaced on moving away from the second flange compared with the locking nut (52a).

7. Device according to any one of the claims 1 to 6, characterized in that the O-rings (44, 62a, 62b) are metal joints.

8. Device according to any one of the claims 1 to 7, characterized in that the two first O-rings (62a, 62b) are mounted in handling plates (64a, 64b).

9. Device according to any one of the preceding claims, characterized in that the end surfaces (16a, 16b) of the first flanges are planar and the end surfaces (48a, 48b) of the second flanges spherical.

FIG. 1

EP 0 251 860 B1

FIG. 2

FIG. 3

EP 0 251 860 B1

FIG. 4

FIG. 5

FIG. 6

FIG. 7

EP 0 251 860 B1